# EUROPÄISCHE PATENTSCHRIFT

(11) **EP 1 767 610 B1**
(45) Veröffentlichungstag und Bekanntmachung des Hinweises auf die Patenterteilung: **23.03.2011**
(21) Anmeldenummer: 06018633.5
(22) Anmeldetag: 06.09.2006
(51) Int. Cl.: C10L 1/198, C10L 1/14, C10L 10/08, C10L 10/14, B01D 17/05

(54) **Additive zur Verbesserung der Kältefliessfähigkeit und Schmierfähigkeit von Brennstoffölen**
Additives for improving the cold flow and the lubricity of fuel oils.
Additifs d'amélioration de l'écoulement à froid et du pouvoir lubrifiant d'huiles combustibles.

(30) Priorität: 22.09.2005 DE 102005045134
(43) Veröffentlichungstag der Anmeldung: 28.03.2007
(73) Patentinhaber: Clariant Produkte (Deutschland) GmbH, 65929 Frankfurt am Main (DE)
(72) Erfinder: Krull, Matthias, Dr., 55296 Harxheim (DE); Cohrs, Carsten, Dr., 84489 Burghausen (DE); Rausch, Heidi, 84518 Garching/Alz (DE)
(74) Vertreter: Mikulecky, Klaus

(56) Entgegenhaltungen:
- EP-A1- 1 380 633
- EP-A2- 0 362 727
- EP-A2- 1 767 611
- US-A- 3 705 862

## Beschreibung

Die vorliegende Erfindung betrifft Alkylphenol-Aldehyd-Harze, welche Struktureinheiten von Fettsäuren bzw. deren Derivaten enthalten, und die verbesserte anwendungstechnische Eigenschaften als Additive für Brennstofföle aufweisen.

Polyzyklische aromatische Kohlenwasserstoffe sind Bestandteile aller höher siedenden Fraktionen bei der Destillation von Rohöl. Sie werden als schädlich für die Gesundheit von Lebewesen und für die Umwelt angesehen. Daher wird der Gehalt von Brennstoffölen an polyzyklischen aromatischen Kohlenwasserstoffen immer weiter abgesenkt, wodurch unter anderem eine Reduktion von gesundheitsschädlichen Partikelemissionen in Abgasen erreicht wird. Die gesundheitlichen Bedenken gegenüber den auch als Polyaromaten bezeichneten polyzyklischen aromatischen Kohlenwasserstoffen wie beispielsweise Naphthalin, das unter dem Verdacht steht Krebs zu erzeugen, verursachen eine Suche nach Wegen zur Verminderung dieser Substanzen in technischen Produkten. Aus dem gleichen Grund wird für Brennstofföle auf Basis nachwachsender Rohstoffe nach Möglichkeiten gesucht, die oftmals als Lösemittel für die Herstellung von Additiven eingesetzten Kohlenwasserstoffe mineralischen Ursprungs durch nachwachsende Rohstoffe zu ersetzen. Unter polyaromatischen Kohlenwasserstoffen werden hier Verbindungen verstanden, die mindestens zwei annellierte aromatische Ringe enthalten.

Zur Verbesserung der Verwendungseigenschaften werden Brennstoffölen mineralischen wie auch tierischen und pflanzlichen Ursprungs verschiedenartige Additive zugesetzt. Dabei handelt es sich vorwiegend um synthetische monomere wie auch polymere Verbindungen. Eine für verschiedene Zwecke eingesetzte Verbindungsklasse sind Alkylphenolharze und deren Derivate, die durch Kondensation von Alkylphenolen mit Aldehyden unter sauren bzw. basischen Bedingungen hergestellt werden. Beispielsweise werden Alkylphenolharze als Kaltfließverbesserer, Schmierverbesserer, Oxidationsinhibitoren, Korrosionsinhibitoren sowie Asphaltendispergatoren, und alkoxilierte Alkylphenolharze als Demulgatoren in Mitteldestillaten eingesetzt. Des weiteren werden Alkylphenolharze als Stabilisatoren für Jet-fuel eingesetzt. Auch werden Harze aus Benzoesäureestern mit Aldehyden bzw. Ketonen als Kälteadditive für Brennstofföle eingesetzt.

Üblicherweise wird die Kondensationsreaktion zur Herstellung von Alkylphenolharzen in höher siedenden aromatischen Lösemitteln durchgeführt. Des weiteren müssen Alkylphenolharze, bei denen es sich per se um hochviskose bzw. spröde Polymere handelt, für die Verwendung als Additive für Brennstofföle in einem Lösemittel gelöst werden. Auf Grund der physikochemischen Eigenschaften der Alkylphenolharze sind sowohl für die Kondensation als auch für die Herstellung von Konzentraten höher siedende aromatische Kohlenwasserstoffe bzw. technische Kohlenwasserstoffgemische bevorzugt. Diese enthalten typischerweise 10 Gew.-% und mehr an polyaromatischen Kohlenwasserstoffen. Aliphatische Kohlenwasserstoffe sind auf Grund ihrer Löseeigenschaften für Alkylphenolharze ungeeignet.

Oftmals ist auch die Performance der bekannten Additive unbefriedigend. Insbesondere in hydrierend raffinierten Brennstoffölen mit niedrigem Schwefel- und Aromatengehalt sowie gleichzeitig hohem Gehalt an n-Paraffinen ist die Wirksamkeit der Kaltfließverbesserer und Paraffindispergatoren des Standes der Technik nicht ausreichend. Des weiteren ist in Additivpaketen die Verträglichkeit von Alkylphenolharzen mit weiteren Additiven wie Ethylen-Copolymeren und polaren Stickstoffverbindungen oftmals unzureichend und es kommt zu Phasenseparationen.

EP-A-0 311 452 offenbart Alkylphenol-Formaldehyd-Kondensate als Kälteadditive für Brennstoffe und Schmieröle.

EP-A-0 857 776 und EP-A-1 088 045 offenbaren die Verwendung von Alkylphenolharzen in Kombination mit Ethylen-Copolymeren und stickstoffhaltigen Paraffindispergatoren zur Verbesserung der Kälteeigenschaften von Mitteldestillaten.

EP 0 935 645 offenbart die Verwendung von Alkylphenolharzen zur Verbesserung der Schmierfähigkeit schwefelarmer Mitteldestillate.

EP-A-1 482 024 offenbart Kondensate aus p-Hydroxybenzoesäureestern und Aldehyden bzw. Ketonen als Kältead ditive für Brennstofföle.

EP-A-0 381 966 offenbart ein Verfahren zur Herstellung von Novolaken durch Kondensation von Phenolen mit Aldehyden unter azeotropem Auskreisen von Wasser.

EP-A-1 380 633 offenbart oxidationsstabilisierte ölige Flüssigkeiten, die Ester aus Fettsäuren, deren Kohlenstoffkettenlängen zwischen 8 und 30 C-Atomen haben, und einem einwertigen C1-C5-Alkohol, und mindestens ein Alkylphenol-Aldehydharz enthalten. Die Harze können lösemittelfrei hergestellt und verwendet werden.

Im Rahmen der vorliegenden Erfindung werden unter Alkylphenolharzen alle Polymere verstanden, die durch Kondensation eines Alkylreste tragenden Phenols mit Aldehyden bzw. Ketonen zugänglich sind. Der Alkylrest kann dabei direkt über eine C-C-Bindung an den Arylrest des Phenols gebunden sein oder auch über funktionelle Gruppen wie Ester oder Ether. Das Phenol kann alkoxyliert sein.

Aufgabe vorliegender Erfindung war es somit, ein Additiv zur Verbesserung sowohl der Kälteeigenschaften als auch der Schmiereigenschaften von Mineralöldestillaten zu finden, das im wesentlichen frei von monomeren bzw. niedermolekularen polyaromatischen Verbindungen ist. Eine weitere Aufgabe der Erfindung war es, die Verträglichkeit zwischen Alkylphenolharzen und weiteren Additivkomponenten, insbesondere weiteren Kälteadditivkomponenten zu verbessern, um Phasenseparationen in Additivpaketen, die mehrere Wirkstoffe enthalten, zu vermeiden.

Es wurde gefunden, dass die Kondensation von Alkylphenolen mit Aldehyden in Gegenwart von Fettsäuren mit 2-50 C-Atomen bzw. Derivaten wie beispielsweise deren Estern mit Alkoholen mit 1 bis 10 C-Atomen und 1 bis 5 OH-Gruppen zu Harzen mit verbesserten anwendungstechnischen Eigenschaften als Additive für Brennstofföle führen. Insbesondere in Kombination mit Ethylen-Copolymeren und gegebenenfalls polaren Stickstoffverbindungen zeigen sie eine gegenüber herkömmlichen Harzen verbesserte Wirksamkeit als Kaltfließverbesserer und Lubricity-Additiv. Auch die Verträglichkeit zwischen den drei Polymergruppen ist deutlich verbessert. Es werden folglich keine zusätzlichen Lösevermittler benötigt, um eine Phasenseparation zu verhindern. Gleichzeitig sind die genannten Fettsäuren und deren Derivate geeignete Lösemittel zur Herstellung von Additivkonzentraten.

Gegenstand der Erfindung sind somit Alkylphenol-Aldehydharze, enthaltend Oligo- oder Polymere mit einer repetitiven Struktureinheit der Formel 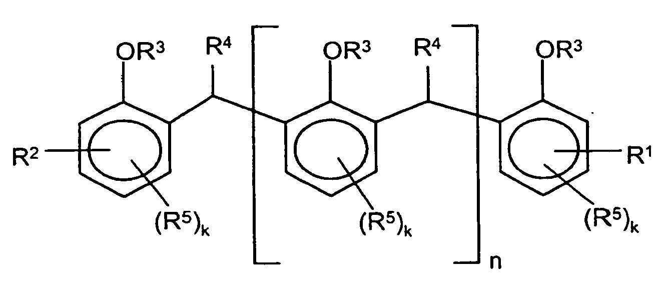 worin
- R¹: für einen verzweigten Alkyl- oder Alkenylrest mit 10 bis 40 C-Atomen steht, der mindestens eine Carboxyl-, Carboxylat- und/oder Estergruppe trägt,
- R²: für Wasserstoff oder R¹
- R³: für Wasserstoff oder eine Alkoxygruppe der Formel

-(A-O)ₘ-H,
- A: für eine C₂- bis C₄-Alkylengruppe,
- m: für eine Zahl von 1 bis 100,
- R⁴: für Wasserstoff, einen C₁- bis C₁₁-Alkylrest oder eine Carboxylgruppe,
- R⁵: für C₁-C₂₀₀-Alkyl oder -Alkenyl, O-R⁶ oder O-C(O)-R⁶,
- R⁶: für C₁-C₂₀₀-Alkyl oder -Alkenyl,
- n: für eine Zahl von 1 bis 100 und
- k: für 1 oder 2 steht.

Ein weiterer Gegenstand der Erfindung sind Brennstoffzusammensetzungen mit einem Schwefelgehalt von weniger als 350 ppm, enthaltend 1 bis 1000 ppm des erfindungsgemäßen Alkylphenol-Aldehydharzes und einen flüssigen Brennstoff, der ein Mineralöldestillat und/oder ein aus pflanzlichen oder tierischen Rohstoffen gewonnenes Öl ist.

Ein weiterer Gegenstand der Erfindung ist die Verwendung des erfindungsgemäßen Alkylphenol-Aldehydharzes zur Verbesserung der Schmierfähigkeit von Mitteldestillaten mit einem Schwefelgehalt von weniger als 350 ppm.

Ein weiterer Gegenstand der Erfindung ist die Verwendung des erfindungsgemäßen Alkylphenol-Aldehydharzes zur Verbesserung der Kaltfließfähigkeit von Mitteldestillaten mit einem Schwefelgehalt von weniger als 350 ppm sowie von Brennstoffölen pflanzlichen und/oder tierischen Ursprungs.

A steht vorzugsweise für eine Ethylen- und/oder Propylengruppe, insbesondere für eine Ethylengruppe.
m steht vorzugsweise für eine Zahl von 2 bis 50, insbesondere von 3 bis 20.
R⁴ steht vorzugsweise für Wasserstoff oder C₁- bis C₃-Alkyl, insbesondere für Wasserstoff.
R⁶ steht bevorzugt für C₄-C₂₀-Alkyl oder -Alkenyl und insbesondere für C₆-C₁₆-Alkyl oder -Alkenyl. Besonders bevorzugt steht R⁵ für C₄-C₂₀-Alkyl oder -Alkenyl und insbesondere für C₆-C₁₆-Alkyl oder -Alkenyl wie beispielsweise für C₆-C₁₂-Alkyl oder -Alkenyl.

Bevorzugt steht n für eine Zahl von 2 bis 50 und speziell für eine Zahl von 3 bis 25 wie beispielsweise eine Zahl von 5 bis 15.

k steht vorzugsweise für 1. Weiterhin ist es bevorzugt, dass k gleich 1 ist, und R⁵ in para-Stellung zur OR³-Gruppe steht.

R¹ steht bevorzugt für einen verzweigten C₁₂-C₂₄-Alkyl- oder Alkenylrest Speziell einen C₁₂-C₂₂-Alkyl- oder Alkenylrest und insbesondere für einen C₁₆-C₂₀-Alkyl- oder Alkenylrest des mindestens eine Carboxyl-, Carboxylat- und/oder Estergruppe trägt. Bevorzugt ist der Rest R¹ über ein sekundäres C-Atom der Alkylkette an das aromatische Ringsystem gebunden. Diese Bindung resultiert aus der Alkylierung des Phenols über eine Doppelbindung der ungesättigten Fettsäure bzw. des ungesättigten Fettsäurederivats, wodurch ihre Position innerhalb der Seitenkette bestimmt ist Bevorzugt ist der Rest R¹ gesättigt. In einer weiteren bevorzugten Ausführungsform enthält der Rest R¹ eine oder zwei Doppelbindungen, insbesondere eine Doppelbindung. Bevorzugt trägt der Rest R¹ eine endständige Carboxylgruppe. In einer weiteren bevorzugten Ausführungsform trägt der Rest R¹ eine endständige Estergruppierung, deren Alkoholkomponente sich von einem Alkohol mit 1 bis 5 C-Atomen und 1 bis 6 OH-Gruppen ableitet. Besonders bevorzugt leitet sich dieser Ester von Alkoholen mit 1 bis 4 C-Atomen wie beispielsweise Methanol, Ethanol und Propanol ab.

Im erfindungsgemäßen Alkylphenolharz befindliche Carbonsäuregruppen können nach der Kondensation ganz oder teilweise wie beispielsweise zu 90 %, zu 70 %, zu 50 %, zu 25 % oder zu 10 % neutralisiert werden. Bevorzugt erfolgt dieses mit Ammoniak, Aminen oder aromatischen Basen. Geeignete Amine sind primäre, sekundäre und tertiäre Amine deren Alkylreste unabhängig voneinander 1 bis 24 C-Atome, bevorzugt 4 bis 22 C-Atome tragen. Besonders bevorzugt sind primäre und sekundäre Amine mit mindestens einem C₁₂- bis C₂₄-Alkylrest, wie beispielsweise Cocosfettamin, Talgfettamin, Dicocosfettamin, Ditalgfettamin, Dibehenylamin und deren Mischungen. Des gleichen sind zur Neutralisation aromatische Basen geeignet, die ein zyklisches, durchkonjugiertes Kohlenwasserstoffgerüst mit 4n+2 π-Elektronen sowie mindestens ein zur Salzbildung befähigtes Heteroatom, bevorzugt Stickstoff, enthalten wie beispielsweise Pyridin und Imidazol.

Im erfindungsgemäßen Alkylphenolharz befindliche Carbonsäuregruppen können nach der Kondensation ganz oder teilweise wie beispielsweise zu 90 %, zu 70 %, zu 50 %, zu 25 % oder zu 10 % mit Alkylenoxiden umgesetzt werden. Geeignete Alkylenoxide sind Ethylenoxid, Propylenoxid, Butylenoxid und deren Mischungen. Die Oxalkylierung erfolgt bevorzugt mit 1 bis 100, insbesondere mit 5 bis 20 mol Alkylenoxid pro Carbonsäuregruppe.

Die erfindungsgemäßen Alkylphenol-Aldehydharze sind beispielsweise durch Kondensation der entsprechenden Alkylphenole mit einem Aldehyd oder Keton, beispielsweise Formaldehyd, d.h. vorzugsweise 0,5 bis 1,5 Mol, insbesondere 0,8 bis 1,2 Mol Aldehyd oder Keton pro Mol Alkylphenol zugänglich, wobei die Kondensation in Gegenwart einer Fettsäure oder eines Fettsäurederivats, bevorzugt eines Fettsäurealkylesters erfolgt. Die Kondensation wird bevorzugt in Gegenwart von 1 bis 70 Gew.-%, bevorzugt 3 bis 60 Gew.-%, insbesondere 5 bis 50 Gew.-% der Fettsäure bzw. des Fettsäureesters bezogen auf die Gesamtmenge an Alkylphenol, Aldehyd oder Keton und Fettsäure bzw. -ester durchgeführt. Fettsäure bzw. Fettsäureester können dabei bei geringen Konzentrationen wie beispielsweise 1 bis 10 Gew.-% und bevorzugt 2 bis 5 Gew.-% als Reagenz zugesetzt werden, besonders bevorzugt werden sie jedoch in größeren Mengen von 10 bis 70 Gew.-% und speziell 20 bis 60 Gew.-% zugesetzt, wodurch die Viskosität des Reaktionsansatzes abgesenkt und damit seine Handhabbarkeit erleichtert wird. Überschüssige Fettsäure bzw. Fettsäurederivat können nach beendeter Reaktion z.B. durch Destillation abgetrennt werden; bevorzugt verbleiben sie aber im Harz. Bevorzugt enthalten die erfindungsgemäßen Alkylphenolharze und die sie enthaltenden Brennstofföle 0,2 bis 5 Gewichtsteile, besonders bevorzugt 0,3 bis 3 Gewichtsteile wie beispielsweise 0,5 bis 2 Gewichtsteile mindestens einer Fettsäure bzw. eines Fettsäurederivats, speziell eines Fettsäureesters pro Gewichtsteil Alkylphenolharz.

Die Kondensation erfolgt bevorzugt zwischen 70 und 200 °C wie beispielsweise zwischen 90 und 160 °C. Sie wird üblicherweise durch 0,05 bis 5 Gew.-% Basen oder Säuren katalysiert. Als Katalysatoren für die Kondensationsreaktionen von Alkylphenol und Aldehyd sind neben Carbonsäuren wie Essigsäure und Oxalsäure insbesondere starke Mineralsäuren wie Salzsäure, Phosphorsäure und Schwefelsäure sowie Sulfonsäuren gebräuchliche Katalysatoren. Besonders geeignete Katalysatoren sind Sulfonsäuren, die mindestens eine Sulfonsäuregruppe und mindestens einen gesättigten oder ungesättigten, linearen, verzweigten und/oder cyclischen Kohlenwasserstoffrest mit 1 bis 40 C-Atomen und bevorzugt mit 3 bis 24 C-Atomen enthalten. Besonders bevorzugt sind aromatische Sulfonsäuren, speziell alkylaromatische Mono-Sulfonsäuren mit einem oder mehreren C₁-C₂₈-Alkylresten und insbesondere solche mit C₃-C₂₂-Alkylresten. Bevorzugt tragen die alkylaromatischen Sulfonsäuren ein oder zwei, insbesondere einen Alkylrest. Die zu Grunde liegenden Arylgruppen sind bevorzugt mono- und bizyklisch, insbesondere monozyklisch. In einer bevorzugten Ausführungsform tragen die Arylgruppen keine Carboxylgruppen und speziell tragen sie nur Sulfonsäure- und Alkylgruppen. Geeignete Beispiele sind Methansulfonsäure, Butansulfonsäure, Benzolsulfonsäure, p-Toluolsulfonsäure, Xylolsulfonsäure, 2-Mesitylensulfonsäure,
4-Ethylbenzolsulfonsäure, Isopropylbenzolsulfonsäure, 4-Butylbenzolsulfonsäure, 4-Octylbenzolsulfonsäure; Dodecylbenzolsulfonsäure, Didodecylbenzolsulfonsäure, Naphthalinsulfonsäure. Auch Mischungen dieser Sulfonsäuren sind geeignet. Üblicherweise verbleiben diese nach Beendigung der Reaktion als solche oder in neutralisierter Form im Produkt.

Bevorzugt wird der für die Kondensation des Alkylphenolharzes eingesetzte saure Katalysator mit einer Base wie Natron- oder Kalilauge oder bevorzugt mit Aminen oder aromatischen Basen neutralisiert. Die Neutralisation erfolgt bevorzugt durch Umsetzung der als Katalysator eingesetzten Säure mit 0,8 bis 10 Mol Base, bevorzugt 0,9 bis 5 Mol Base, besonders bevorzugt 0,95 bis 2 Mol Base, wie beispielsweise etwa equimolar. Dabei wird insbesondere bei mehrbasischen Säuren und/oder Basen die Molzahl der insgesamt umgesetzten Säure- und Basengruppen betrachtet. Das gebildete Salz kann anschließend abgetrennt werden, bevorzugt verbleibt es jedoch im Alkylphenolharz.

Bevorzugt enthalten die erfindungsgemäßen Brennstofföle 1 bis 1.000 ppm, besonders bevorzugt 5 bis 150 und speziell 10 bis 100 ppm mindestens eines erfindungsgemäßen Alkylphenolharzes.

Erfindungsgemäß geeignet sind insbesondere solche Alkylphenol-Aldehydharze, die sich von Alkylphenolen mit ein oder zwei Alkylresten in ortho- und/oder para-Position zur OH-Gruppe ableiten. Besonders bevorzugt als Ausgangsmaterialien sind Alkylphenole, die am Aromaten zwei zur Kondensation mit Aldehyden befähigte Wasserstoffatome tragen und insbesondere monoalkylierte Phenole. Besonders bevorzugt befindet sich der Alkylrest in der para-Stellung zur phenolischen OH-Gruppe. Bevorzugt werden zur Herstellung der erfindungsgemäßen Harze Alkylphenole eingesetzt, die zu mindestens 50 mol-% aus p-Alkylphenolen bestehen, besonders bevorzugt aus mindestens 70 mol-% und speziell aus mehr als 90 mol-% wie beispielsweise aus mehr als 95 oder mehr als 97 mol-% p-Alkylphenolen bezogen auf die Gesamtheit der eingesetzten Alkylphenole bestehen. Der Anteil an trifunktionellen Phenolen, die über zwei ortho- und eine para-Position zur OH-Gruppe eine Kondensation mit Aldehyden eingehen können, ist bevorzugt unter 10 mol-% und insbesondere unter 5 mol-% wie beispielsweise unter 4 mol-% bezogen auf die Gesamtheit der eingesetzten Alkylphenole. Die Alkylreste (darunter werden für die Alkylphenole generell Kohlenwasserstoffreste gemäß nachstehender Definition verstanden) können bei den im erfindungsgemäßen Verfahren einsetzbaren Alkylphenol-Aldehyd-Harzen gleich oder verschieden sein, sie können gesättigt oder ungesättigt sein und besitzen 1 - 200, vorzugsweise 1 - 20, insbesondere 4-12 Kohlenstoffatome; bevorzugt handelt es sich um n-, iso- und tert.-Butyl-, n- und isoPentyl-, n- und iso-Hexyl-, n- und iso-Octyl-, n- und iso-Nonyl-, n- und iso-Decyl-, n- und iso-Dodecyl-, Tetradecyl-, Hexadecyl-, Octadecyl-, Tripropenyl-, Tetrapropenyl-, Poly(propenyl)- und Poly(isobutenyl)reste. Bevorzugt sind diese Reste gesättigt.

Geeignete Alkylphenolharze können auch Struktureinheiten weiterer Phenolanaloga wie Salicylsäure, Hydroxybenzoesäure sowie deren Derivate wie Ester, Amide und/oder Salze enthalten oder aus ihnen bestehen.

Geeignete Aldehyde für die Herstellung der erfindungsgemäßen Alkylphenol-Aldehydharze sind solche mit 1 bis 12 Kohlenstoffatomen und vorzugsweise solche mit 1 bis 4 Kohlenstoffatomen wie beispielsweise Formaldehyd, Acetaldehyd, Propionaldehyd, Butyraldehyd, 2-Ethylhexanal, Benzaldehyd, Glyoxalsäure sowie deren reaktive Equivalente wie Paraformaldehyd und Trioxan. Besonders bevorzugt ist Formaldehyd in Form von Paraformaldehyd und insbesondere Formalin.

Die erfindungsgemäßen Alkylphenolharze haben bevorzugt mittels Gelpermeationschromatographie gegen Poly(styrol)-Standards in THF gemessene Molekulargewichte von 400 bis 25.000, bevorzugt von 600 bis 10.000 g/mol und speziell von 800 bis 5.000 g/mol wie beispielsweise von 900 bis 3.000 g/mol. Die Polydispersität Mw/Mn liegt bevorzugt zwischen 1,2 und 4,0 besonders bevorzugt zwischen 1,5 und 3,0. Voraussetzung ist hierbei, dass die Alkylphenol-Aldehydharze zumindest in anwendungsrelevanten Konzentrationen von 0,001 bis 1 Gew.-% öllöslich sind.

Geeignete Fettsäuren zur Herstellung der erfindungsgemäßen Alkylphenolharze haben bevorzugt 6 bis 40, insbesondere 10 bis 26 und speziell 12 bis 22 C-Atome. Die Alkenylreste und gegebenenfalls Alkylreste der Fettsäuren bestehen im wesentlichen aus Kohlenstoff und Wasserstoff. Sie können jedoch weitere Substituenten wie z.B. Hydroxy- oder Halogengruppen tragen, sofern diese den vorwiegenden Kohlenwasserstoffcharakter nicht beeinträchtigen. Bevorzugt sind Fettsäuren mit linearen und verzweigten Kohlenwasserstoffresten, besonders bevorzugt sind lineare Reste. Die Fettsäuren enthalten vorzugsweise mindestens eine Doppelbindung. Bevorzugt befindet sich diese nicht in α-β-Stellung zur Carboxylfunktion. Sie können mehrere Doppelbindungen, beispielsweise 2 oder 3 Doppelbindungen, enthalten und natürlicher oder synthetischer Herkunft sein. Bei mehrfach ungesättigten Carbonsäuren können deren Doppelbindungen isoliert oder auch konjugiert sein. Bevorzugt sind Mischungen aus zwei oder mehr ungesättigten Fettsäuren mit 10 bis 26 C-Atomen. In besonders bevorzugten Fettsäuremischungen enthalten mindestens 50 Gew.-%, speziell mindestens 75 Gew.-% wie beispielsweise mindestens 90 Gew.-% der Fettsäuren eine oder mehrere Doppelbindungen. Die Jodzahlen der den erfindungsgemäßen Estern zugrunde liegenden Fettsäuren bzw. Fettsäuregemische liegen bevorzugt oberhalb 50 g J/100 g, besonders bevorzugt zwischen 60 und 190 g J/100 g, insbesondere zwischen 100 und 180 g J/100 g und speziell zwischen 120 und 180 g I/100 g Fettsäure bzw. Fettsäuregemisch.

Geeignete ungesättigte Fettsäuren sind beispielsweise Öl-, Eruca-, Palmitolein-, Myristolein-, Linol-, Linolen-, Elaeosterin-, Arachidon- und/oder Ricinolsäure. Bevorzugt werden erfindungsgemäß aus natürlichen Fetten und Ölen gewonnene Fettsäuremischungen wie z.B. Cocosnussöl-, Erdnussöl-, Fisch-, Leinöl-, Palmöl-, Rapsöl-, Ricinen-, Ricinusöl-, Rüböl-, Sojaöl-, Sonnenblumenöl-, Färberdistel- und Tallölfettsäure sowie daraus z.B. durch Destillation erhaltene Fraktionen eingesetzt.

Als Bestandteil der Fettsäuremischungen ebenfalls geeignet sind Dicarbonsäuren, wie Dimerfettsäuren und Alkyl- sowie Alkenylbernsteinsäuren mit C₈-C₅₀-Alk(en)ylresten, bevorzugt mit C₈-C₄₀-, insbesondere mit C₁₂-C₂₂-Alk(en)ylresten. Die Alkylreste können linear wie auch verzweigt (oligomerisierte Alkene, Polyisobutylen) und gesättigt oder ungesättigt sein. Bevorzugt sind Anteile von bis zu 10 Gew.-%, insbesondere weniger als 5 Gew.-% bezogen auf den Bestandteil A). Bevorzugte Fettsäuremischungen enthalten untergeordnete Mengen, d.h. bis zu 20 Gew.-%, bevorzugt weniger als 10%, insbesondere weniger als 5 % und speziell weniger als 2 % gesättigter Fettsäuren wie beispielsweise Laurin- Tridecan-, Myristin-, Pentadecan-, Palmitin-, Margarin-, Stearin-, Isostearin-, Arachin- und Behensäure.

Die Fettsäuren können weiterhin untergeordnete Mengen von bis zu 20 Gew.-%, bevorzugt bis zu 25 Gew.-%, wie beispielsweise 1 bis 5 Gew.-% Harzsäuren wie beispielsweise Abietinsäure, Dihydroabietinsäure, Tetrahydroabietinsäure, Dehydroabietinsäure, Neoabietinsäure, Pimarsäure, Levopimarsäure, Palustrinsäure sowie deren Derivate enthalten. Besonders bevorzugt enthalten sie weniger als 2 Gew.-% und speziell sind sie im wesentlichen frei von Harzsäuren.

Besonders geeignete Fettsäureester zur Herstellung der erfindungsgemäßen Alkylphenolharze sind solche, die sich von oben genannten Fettsäuren und niederen Alkoholen mit 1 bis 5 Kohlenstoffatomen ableiten, wobei Ester der oben genannten Fettsäuren mit niederen Alkoholen mit 1 bis 5 Kohlenstoffatomen und nur einer OH-Gruppe besonders bevorzugt sind. Beispiele für besonders geeignete Alkohole sind Methanol, Ethanol und Propanol, insbesondere Methanol. Besonders geeignete Fettsäureester sind von pflanzlichen Ölen abgeleitete Ester wie Rapsölsäuremethylester, Sonnenblumenölsäuremethylester, Sojafettsäuremethylester, Palmölsäuremethylester sowie Tallölfettsäuremethylester. Auch Ester mehrwertiger Alkohole mit 2 bis 6 OH-Gruppen, bevorzugt mit 2 oder 3 OH-Gruppen wie beispielsweise Ethylenglykol, Diethylenglykol, Glycerin und Trimethylolpropan sind geeignet.

Die Fettsäureester sind aus Alkoholen und Fettsäuren in bekannter Weise durch Veresterung herstellbar. Bevorzugt ist die Umesterung natürlich vorkommender Fette und Öle mit niederen Alkoholen und insbesondere mit Methanol, wobei als Nebenprodukt Glycerin entsteht. Bevorzugt sind solche Ester, die aus einem Fettsäuregemisch herstellbar sind.

Für den Einsatz in Mitteldestillaten wie Diesel und Heizöl besonders bevorzugt sind erfindungsgemäße Alkylphenol-Formaldehydharze mit C₂-C₄₀-Alkylresten des Alkylphenols, bevorzugt mit C₄-C₂₀-Alkylresten wie beispielsweise C₆-C₁₂-Alkylresten. Die Alkylreste können linear oder verzweigt sein, bevorzugt sind sie linear. Besonders geeignete Alkylphenol-Aldehydharze leiten sich von linearen Alkylresten mit 8 und 9 C-Atomen ab. Das mittels GPC bestimmte mittlere Molekulargewicht liegt bevorzugt zwischen 700 und 20.000, insbesondere zwischen 800 und 10.000 wie beispielsweise zwischen 1.000 und 3.000 g/Mol. Der Polymerisationsgrad n beträgt vorzugsweise 1 bis 20, insbesondere 2 bis 15 wie beispielsweise 5 bis 10. Die endständigen Reste R¹ leiten sich bevorzugt von niederen Alkylestern ungesättigter Fettsäuren und insbesondere von Methylestern pflanzlicher Öle und Fette ab.

Für den Einsatz in Benzin und Jet-Fuel besonders bevorzugt sind erfindungsgemäße Alkylphenol-Formaldehydharze, deren Alkylreste 4 bis 200 C-Atome, bevorzugt 10 bis 180 C-Atome tragen und sich von Oligomeren oder Polymeren von Olefinen mit 2 bis 6-C-Atomen wie beispielsweise von Poly(isobutylen) ableiten. Sie sind somit bevorzugt verzweigt. Der Polymerisationsgrad (n) liegt hier bevorzugt zwischen 2 und 50, besonders bevorzugt zwischen 3 und 20 Alkylphenoleinheiten. Die endständigen Reste R¹ leiten sich bevorzugt von niederen Alkylestern ungesättigter Fettsäuren und insbesondere von Methylestern pflanzlicher Öle und Fette ab.

Die erfindungsgemäßen Alkylphenol-Aldehydharze werden zwecks einfacher Handhabung bevorzugt als Konzentrate eingesetzt, die 10 bis 90 Gew.-% und bevorzugt 20 bis 60 Gew.-% an Lösemittel enthalten. Geeignete Lösemittel sind höhersiedende aliphatische Kohlenwasserstoffe, aromatische Kohlenwasserstoffe, Alkohole, Ester, Ether und deren Gemische. Unter ökologischen Gesichtspunkten sind als Lösemittel jedoch die auch als Reaktionsmedium geeigneten Fettsäuren sowie deren Derivate und insbesondere die oben genannten Fettsäureester besonders bevorzugt.

Die erfindungsgemäßen Verbindungen finden allein oder in Mischung mit anderen Bestandteilen als Additive für Mineralöldestillate Verwendung, im Folgenden werden sie daher als erfindungsgemäße Additive bezeichnet.

Die erfindungsgemäßen Additive können Mitteldestillaten zur Verbesserung der Kaltfließfähigkeit auch in Kombination mit weiteren Additiven wie beispielsweise Ethylen-Copolymeren, polaren Stickstoffverbindungen, Kammpolymeren, Polyoxyalkylenverbindungen und/oder Olefincopolymeren zugesetzt werden.

Werden die erfindungsgemäßen Additive für Mitteldestillate verwendet, so enthalten sie in einer bevorzugten Ausführungsform neben den erfindungsgemäßen Harzen noch ein oder mehrere der Bestandteile II bis VI.

So enthalten sie bevorzugt Copolymere aus Ethylen und olefinisch ungesättigten Verbindungen, insbesondere ungesättigte Ester, als Bestandteil II. Als Ethylen-Copolymere eignen sich insbesondere solche, die neben Ethylen 6 bis 21 mol-%, insbesondere 10 bis 18 mol-% Comonomere enthalten.

Bei den olefinisch ungesättigten Verbindungen handelt es sich vorzugsweise um Vinylester, Acrylester, Methacrylester, Alkylvinylether und/oder Alkene, wobei die genannten Verbindungen mit Hydroxylgruppen substituiert sein können. Es können ein oder mehrere Comonomere im Polymer enthalten sein.

Bei den Vinylestern handelt es sich vorzugsweise um solche der Formel 1

CH₂=CH-OCOR¹ (1)

worin R¹ C₁ bis C₃₀-Alkyl, vorzugsweise C₄ bis C₁₆-Alkyl, speziell C₆- bis C₁₂-Alkyl bedeutet. In einer weiteren Ausführungsform können die genannten Alkylgruppen mit einer oder mehreren Hydroxylgruppen substituiert sein.

In einer weiteren bevorzugten Ausführungsform steht R¹ für einen verzweigten Alkylrest oder einen Neoalkylrest mit 7 bis 11 Kohlenstoffatomen, insbesondere mit 8, 9 oder 10 Kohlenstoffatomen. Besonders bevorzugte Vinylester leiten sich von sekundären und insbesondere tertiären Carbonsäuren ab, deren Verzweigung sich in alpha-Position zur Carbonylgruppe befindet. Geeignete Vinylester umfassen Vinylacetat, Vinylpropionat, Vinylbutyrat, Vinylisobutyrat, Vinylhexanoat, Vinylheptanoat, Vinyloctanoat, Pivalinsäurevinylester, 2-Ethylhexansäurevinylester, Vinyllaurat, Vinylstearat sowie Versaticsäureester wie Neononansäurevinylester, Neodecansäurevinylester, Neoundecansäurevinylester.

In einer weiteren bevorzugten Ausführungsform enthalten diese Ethylen-Copolymere Vinylacetat und mindestens einen weiteren Vinylester der Formel 1 worin R¹ für C₄ bis C₃₀-Alkyl, vorzugsweise C₄ bis C₁₆-Alkyl, speziell C₆- bis C₁₂-Alkyl steht.

Bei den Acrylestern handelt es sich vorzugsweise um solche der Formel 2

CH₂=CR²-COOR³ (2)

worin R² Wasserstoff oder Methyl und R³ C₁- bis C₃₀-Alkyl, vorzugsweise C₄- bis C₁₆-Alkyl, speziell C₆- bis C₁₂-Alkyl bedeutet. Geeignete Acrylester umfassen z.B. Methyl(meth)acrylat, Ethyl(meth)acrylat, Propyl(meth)acrylat, n- und isoButyl(meth)acrylat, Hexyl-, Octyl-, 2-Ethylhexyl-, Decyl-, Dodecyl-, Tetradecyl-, Hexadecyl-, Octadecyl(meth)acrylat sowie Mischungen dieser Comonomere. In einer weiteren Ausführungsform können die genannten Alkylgruppen mit einer oder mehreren Hydroxylgruppen substituiert sein. Ein Beispiel für einen solchen Acrylester ist Hydroxyethylmethacrylat.

Bei den Alkylvinylethern handelt es sich vorzugsweise um Verbindungen der Formel 3

CH₂=CH-OR⁴ (3)

worin R⁴ C₁- bis C₃₀-Alkyl, vorzugsweise C₄- bis C₁₆-Alkyl, speziell C₆- bis C₁₂-Alkyl bedeutet. Beispielsweise seien genannt Methylvinylether, Ethylvinylether, isoButylvinylether. In einer weiteren Ausführungsform können die genannten Alkylgruppen mit einer oder mehreren Hydroxylgruppen substituiert sein.

Bei den Alkenen handelt es sich vorzugsweise um einfache ungesättigte Kohlenwasserstoffe mit 3 bis 30 Kohlenstoffatomen, insbesondere 4 bis 16 Kohlenstoffatomen und speziell 5 bis 12 Kohlenstoffatomen. Geeignete Alkene umfassen Propen, Buten, Isobutylen, Penten, Hexen, 4-Methylpenten, Octen, Diisobutylen sowie Norbornen und seine Derivate wie Methylnorbornen und Vinylnorbornen. In einer weiteren Ausführungsform können die genannten Alkylgruppen mit einer oder mehreren Hydroxylgruppen substituiert sein. Besonders bevorzugte Terpolymerisate des 2-Ethylhexansäurevinylesters, des Neononansäurevinylesters bzw. des Neodecansäurevinylesters enthalten außer Ethylen bevorzugt 3,5 bis 20 mol-%, insbesondere 8 bis 15 mol-% Vinylacetat und 0,1 bis 12 mol-%, insbesondere 0,2 bis 5 mol-% des jeweiligen langkettigen Vinylesters, wobei der gesamte Comonomergehalt zwischen 8 und 21 mol-%, bevorzugt zwischen 12 und 18 mol-% liegt. Weitere besonders bevorzugte Copolymere enthalten neben Ethylen und 8 bis 18 mol-% Vinylestern noch 0,5 bis 10 mol-% Olefine wie Propen, Buten, Isobutylen, Hexen, 4-Methylpenten, Octen, Diisobutylen und/oder Norbornen.

Vorzugsweise haben diese Ethylen-Co- und Terpolymere Schmelzviskositäten bei 140°C von 20 bis 10.000 mPas, insbesondere von 30 bis 5.000 mPas, speziell von 50 bis 2.000 mPas. Die Mittels ¹H-NMR-Spektroskopie bestimmten Verzweigungsgrade liegen bevorzugt zwischen 1 und 9 CH₃/100 CH₂-Gruppen, insbesondere zwischen 2 und 6 CH₃/100 CH₂-Gruppen, die nicht aus den Comonomeren stammen.

Bevorzugt werden Mischungen aus zwei oder mehr der oben genannten Ethylen-Copolymere eingesetzt. Besonders bevorzugt unterscheiden sich die den Mischungen zu Grunde liegenden Polymere in mindestens einem Charakteristikum. Beispielsweise können sie unterschiedliche Comonomere enthalten, unterschiedliche Comonomergehalte, Molekulargewichte und/oder Verzweigungsgrade aufweisen.

Das Mischungsverhältnis zwischen den erfindungsgemäßen Alkylphenolharzen und Ethylencopolymeren als Bestandteil II kann je nach Anwendungsfall in weiten Grenzen variieren, wobei die Ethylencopolymere II oftmals den größeren Anteil darstellen. Bevorzugt enthalten derartige Additivmischungen 2 bis 70 Gew.-%, bevorzugt 3 bis 50 Gew.-% und speziell 5 bis 20 Gew.-% der erfindungsgemäßen Alkylphenolharze sowie 30 bis 98 Gew.-%, bevorzugt 50 bis 97 Gew.-% und speziell 70 bis 95 Gew.-% Ethylencopolymere.

Bei den geeigneten öllöslichen polaren Stickstoffverbindungen (Bestandteil III) handelt es sich vorzugsweise um Umsetzungsprodukte von Fettaminen mit Verbindungen, die eine Acylgruppe enthalten. Bei den bevorzugten Aminen handelt es sich um Verbindungen der Formel NR⁶R⁷R⁸, worin R⁶, R⁷ und R⁸ gleich oder verschieden sein können, und wenigstens eine dieser Gruppen für C₈-C₃₆-Alkyl, C₆-C₃₆-Cycloalkyl, C₈-C₃₆-Alkenyl, insbesondere C₁₂-C₂₄-Alkyl, C₁₂-C₂₄-Alkenyl oder Cyclohexyl steht, und die übrigen Gruppen entweder Wasserstoff, C₁-C₃₆-Alkyl, C₂-C₃₆-Alkenyl, Cyclohexyl, oder eine Gruppe der Formeln -(A-O)ₓ-E oder -(CH₂)ₙ-NYZ bedeuten, worin A für eine Ethyl- oder Propylgruppe steht, x eine Zahl von 1 bis 50, E = H, C₁-C₃₀-Alkyl, C₅-C₁₂-Cycloalkyl oder C₆-C₃₀-Aryl, und n = 2, 3 oder 4 bedeuten, und Y und Z unabhängig voneinander H, C₁-C₃₀-Alkyl oder -(A-O)ₓ bedeuten. Die Alkyl- und Alkenylreste können linear oder verzweigt sein und bis zu zwei Doppelbindungen enthalten. Bevorzugt sind sie linear und weitgehend gesättigt, das heißt sie haben Jodzahlen von weniger als 75 gl₂/g, bevorzugt weniger als 60 gl₂/g und insbesondere zwischen 1 und 10 gl₂/g. Besonders bevorzugt sind sekundäre Fettamine, in denen zwei der Gruppen R⁶, R⁷ und R⁸ für C₈-C₃₆-Alkyl, C₆-C₃₆-Cycloalkyl, C₈-C₃₆-Alkenyl, insbesondere für C₁₂-C₂₄-Alkyl, C₁₂-C₂₄-Alkenyl oder Cyclohexyl stehen. Geeignete Fettamine sind beispielsweise Octylamin, Decylamin, Dodecylamin, Tetradecylamin, Hexadecylamin, Octadecylamin, Eicosylamin, Behenylamin, Didecylamin, Didodecylamin, Ditetradecylamin, Dihexadecylamin, Dioctadecylamin, Dieicosylamin, Dibehenylamin sowie deren Mischungen. Speziell enthalten die Amine Kettenschnitte auf Basis natürlicher Rohstoffe wie z.B. Cocosfettamin, Talgfettamin, hydriertes Talgfettamin, Dicocosfettamin, Ditalgfettamin und Di(hydriertes Talgfettamin). Besonders bevorzugte Aminderivate sind Aminsalze, Imide und/oder Amide wie beispielsweise Amid-Ammoniumsalze sekundärer Fettamine, insbesondere von Dicocosfettamin, Ditalgfettamin und Distearylamin. Unter Acylgruppe wird hier eine funktionelle Gruppe folgender Formel verstanden:

> C = O

Für die Umsetzung mit Aminen geeignete Carbonylverbindungen sind sowohl monomere wie auch polymere Verbindungen mit einer oder mehreren Carboxylgruppen. Bei den monomeren Carbonylverbindungen werden solche mit 2, 3 oder 4 Carbonylgruppen bevorzugt. Sie können auch Heteroatome wie Sauerstoff, Schwefel und Stickstoff enthalten. Geeignete Carbonsäuren sind beispielsweise Malein-, Fumar-, Croton-, Itacon-, Bernsteinsäure, C₁-C₄₀-Alkenylbernsteinsäure, Adipin-, Glutar-, Sebacin-, und Malonsäure sowie Benzoe-, Phthal-, Trimellit- und Pyromellitsäure, Nitrilotriessigsäure, Ethylendiamintetra-essigsäure und deren reaktive Derivate wie beispielsweise Ester, Anhydride und Säurehalogenide. Als polymere Carbonylverbindungen haben sich insbesondere Copolymere ethylenisch ungesättigter Säuren wie beispielsweise Acrylsäure, Methacrylsäure, Maleinsäure, Fumarsäure und Itaconsäure erwiesen, besonders bevorzugt sind Copolymere des Maleinsäureanhydrids. Als Comonomere sind solche geeignet, die dem Copolymer Öllöslichkeit verleihen. Unter öllöslich wird hier verstanden, dass sich das Copolymer nach Umsetzung mit dem Fettamin in praxisrelevanten Dosierraten rückstandsfrei im zu additivierenden Mitteldestillat löst. Geeignete Comonomere sind beispielsweise Olefine, Alkylester der Acrylsäure und Methacrylsäure, Alkylvinylester und Alkylvinylether mit 2 bis 75, bevorzugt 4 bis 40 und insbesondere 8 bis 20 Kohlenstoffatomen im Alkylrest. Bei Olefinen bezieht sich die Kohlenstoffzahl auf den an die Doppelbindung gebundene Alkylrest. Die Molekulargewichte der polymeren Carbonylverbindungen liegen bevorzugt zwischen 400 und 20.000, besonders bevorzugt zwischen 500 und 10.000 wie beispielsweise zwischen 1.000 und 5.000.

Besonders bewährt haben sich öllösliche polare Stickstoffverbindungen, die durch Reaktion aliphatischer oder aromatischer Amine, vorzugsweise langkettiger aliphatischer Amine, mit aliphatischen oder aromatischen Mono-, Di-, Tri- oder Tetracarbonsäuren oder deren Anhydriden erhalten werden (vgl. US 4 211 534). Des gleichen sind Amide und Ammoniumsalze von Aminoalkylenpolycarbonsäuren wie Nitrilotriessigsäure oder Ethylendiamintetraessigsäure mit sekundären Aminen als öllösliche polare Stickstoffverbindungen geeignet (vgl. EP 0 398 101). Andere öllösliche polare Stickstoffverbindungen sind Copolymere des Maleinsäureanhydrids mit α,β-ungesättigten Verbindungen, die gegebenenfalls mit primären Monoalkylaminen und/oder aliphatischen Alkoholen umgesetzt werden können (vgl. EP-A-0 154 177, EP 0 777 712), die Umsetzungsprodukte von Alkenylspirobislactonen mit Aminen (vgl. EP-A-0 413 279 B1) und nach EP-A-0 606 055 A2 Umsetzungsprodukte von Terpolymeren auf Basis α,β-ungesättigter Dicarbonsäureanhydride, α,β-ungesättigter Verbindungen und Polyoxyalkylenethern niederer ungesättigter Alkohole.

Das Mischungsverhältnis zwischen den erfindungsgemäßen Alkylphenolharzen und öllöslichen polaren Stickstoffverbindungen als Bestandteil III kann je nach Anwendungsfall variieren. Bevorzugt enthalten derartige Additivmischungen bezogen auf die Wirkstoffe 0,1 bis 10 Gewichtsteile, bevorzugt 0,2 bis 5 Gewichtsteile mindestens einer öllöslichen polaren Stickstoffverbindung pro Gewichtsanteil des erfindungsgemäßen Alkylphenolharzes.

Geeignete Kammpolymere (Bestandteil IV) können beispielsweise durch die Formel 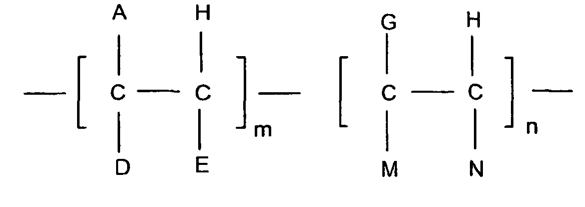 beschrieben werden. Darin bedeuten
- A: R', COOR', OCOR', R"-COOR', OR';
- D: H, CH₃, A oder R";
- E: H, A;
- G: H, R", R"-COOR', einen Arylrest oder einen heterocyclischen Rest;
- M: H, COOR", OCOR", OR", COOH;
- N: H, R", COOR", OCOR", einen Arylrest;
- R': eine Kohlenwasserstoffkette mit 8 bis 50 Kohlenstoffatomen;
- R": eine Kohlenwasserstoffkette mit 1 bis 10 Kohlenstoffatomen;
- m: eine Zahl zwischen 0,4 und 1,0; und
- n: eine Zahl zwischen 0 und 0,6.

Geeignete Kammpolymere sind beispielsweise Copolymere ethylenisch ungesättigter Dicarbonsäuren wie Malein- oder Fumarsäure mit anderen ethylenisch ungesättigten Monomeren wie Olefinen oder Vinylestern wie beispielsweise Vinylacetat. Besonders geeignete Olefine sind dabei α-Olefine mit 10 bis 24 C-Atomen wie beispielsweise 1-Decen, 1-Dodecen, 1-Tetradecen, 1-Hexadecen, 1-Octadecen und deren Mischungen. Auch längerkettige Olefine auf Basis oligomerisierter C₂-C₆-Olefine wie beispielsweise Poly(isobutylen) mit hohem Anteil endständiger Doppelbindungen sind als Comonomere geeignet. Üblicherweise werden diese Copolymere zu mindestens 50 % mit Alkoholen mit 10 bis 22 C-Atomen verestert. Geeignete Alkohole umfassen n-Decan-1-ol, n-dodecan-1-ol, n-Tetradecan-1-ol, n-Hexadecan-1-ol, n-Octadecan-1-ol, n-Eicosan-1-ol und deren Mischungen. Besonders bevorzugt sind Mischungen aus n-Tetradecan-1-ol und n-Hexadecan-1-ol. Als Kammpolymere ebenfalls geeignet sind Poly(alkylacrylate), Poly(alkylmethacrylate) und Poly(alkylvinylether), die sich von Alkoholen mit 12 bis 20 C-Atomen ableiten sowie Poly(vinylester), die sich von Fettsäuren mit 12 bis 20 C-Atomen ableiten.

Geeignete Polyoxyalkylenverbindungen (Bestandteil V) sind beispielsweise Ester, Ether und Ether/Ester von Polyolen, die mindestens einen Alkylrest mit 12 bis 30 C-Atomen tragen. Wenn die Alkylgruppen von einer Säure stammen, stammt der Rest von einem mehrwertigen Alkohol; kommen die Alkylreste von einem Fettalkohol, so stammt der Rest der Verbindung von einer Polysäure.

Geeignete Polyole zur Herstellung von Bestandteil V sind Polyethylenglykole, Polypropylenglykole, Polybutylenglykole und deren Mischpolymerisate mit einem Molekulargewicht von ca. 100 bis ca. 5000, vorzugsweise 200 bis 2000 g/mol. Weiterhin geeignet sind Alkoxylate von Polyolen, wie beispielsweise von Glycerin, Trimethylolpropan, Pentaerythrit, Neopentylglykol, sowie die daraus durch Kondensation zugänglichen Oligomere mit 2 bis 10 Monomereinheiten, wie z.B. Polyglycerin. Bevorzugte Alkoxylate sind solche mit 1 bis 100, insbesondere 5 bis 50 mol Ethylenoxid, Propylenoxid und/oder Butylenoxid pro mol Polyol. Ester sind besonders bevorzugt.

Fettsäuren mit 12 bis 26 C-Atomen sind zur Umsetzung mit den Polyolen zur Bildung der Esteradditive bevorzugt, wobei besonders bevorzugt C₁₈- bis C₂₄-Fettsäuren verwendet werden, speziell Stearin- und Behensäure. Die Ester können auch durch Veresterung von polyoxyalkylierten Alkoholen hergestellt werden. Bevorzugt sind vollständig veresterte polyoxyalkylierte Poylole mit Molekulargewichten von 150 bis 2000, bevorzugt 200 bis 600. Besonders geeignet sind PEG-600-Dibehenat und Glycerin-Ethylenglykol-Tribehenat.

Geeignete Olefincopolymere (Bestandteil VI) als weiterer Bestandteil des erfindungsgemäßen Additivs können sich direkt von monoethylenisch ungesättigten Monomeren ableiten oder indirekt durch Hydrierung von Polymeren, die sich von mehrfach ungesättigten Monomeren wie Isopren oder Butadien ableiten, hergestellt werden. Bevorzugte Copolymere enthalten neben Ethylen Struktureinheiten, die sich von α-Olefinen mit 3 bis 24 C-Atomen ableiten und Molekulargewichte von bis zu 120.000 g/mol aufweisen. Bevorzugte α-Olefine sind Propylen, Buten, Isobuten, n-Hexen, Isohexen, n-Octen, Isoocten, n-Decen, Isodecen. Der Comonomergehalt an α-Olefinen mit 3 bis 24 C-Atomen liegt bevorzugt zwischen 15 und 50 mol-%, besonders bevorzugt zwischen 20 und 35 mol-% und speziell zwischen 30 und 45 mol-%. Diese Copolymeren können auch geringe Mengen, z.B. bis zu 10 mol-% weiterer Comonomere wie z.B. nicht endständige Olefine oder nicht konjugierte Olefine enthalten. Bevorzugt sind Ethylen-Propylen-Copolymere. Die Olefincopolymere können nach bekannten Methoden hergestellt werden, z.B. mittels Ziegler- oder Metallocen-Katalysatoren.

Weitere geeignete Olefincopolymere sind Blockcopolymere, die Blöcke aus olefinisch ungesättigten, aromatischen Monomeren A und Blöcke aus hydrierten Polyolefinen B enthalten. Besonders geeignet sind Blockcopolymere der Struktur (AB)ₙA und (AB)ₘ, wobei n eine Zahl zwischen 1 und 10 und m eine Zahl zwischen 2 und 10 ist.

Das Mischungsverhältnis zwischen den erfindungsgemäßen Alkylphenolharzen und Kammpolymeren (Bestandteil IV), Polyoxyalkylenverbindungen (Bestandteil V) Olefincopolymeren kann je nach Anwendungsfall variieren. Bevorzugt enthalten derartige Additivmischungen bezogen auf die Wirkstoffe jeweils 0,1 bis 10 Gewichtsteile, bevorzugt 0,2 bis 5 Gewichtsteile mindestens eines Kammpolymers, mindestens einer Polyoxyalkylenverbindung und/oder eines Olefincopolymers pro Gewichtsanteil des erfindungsgemäßen Alkylphenolharzes.

Die Additive können allein oder auch zusammen mit anderen Additiven verwendet werden, z.B. mit anderen Stockpunkterniedrigern oder Entwachsungshilfsmitteln, mit Antioxidantien, Cetanzahlverbesserern, Dehazern, Demulgatoren, Detergenzien, Dispergatoren, Entschäumern, Farbstoffen, Korrosionsinhibitoren, Lubricity-Additiven, Schlamminhibitoren, Odorantien und/oder Zusätzen zur Erniedrigung des Cloud-Points.

Die erfindungsgemäßen Additive sind geeignet, die Kaltfließeigenschaften sowie die Schmierfähigkeit von tierischen, pflanzlichen und/oder mineralischen Brennstoffölen zu verbessern. Insbesondere dispergieren sie in Mitteldestillaten die unterhalb des Cloud Points ausfallenden Paraffine. Darüber hinaus können sie auch als Korrosionsinhibitor oder Demulgator in pflanzlichen und/oder mineralischen Brennstoffölen eingesetzt werden. Bei der Formulierung von Additivpaketen, die zusätzlich zu den erfindungsgemäßen Alkylphenol-Aldehydharzen insbesondere Ethylen-Copolymere (Komponente II) sowie polare Stickstoffverbindungen (Komponente III) enthalten, kommt es zu weniger Unverträglichkeiten, so dass auch ohne den Einsatz von Lösevermittlern stabile Formulierungen erhalten werden. Speziell bei der Verwendung zur Additivierung von Kraftstoffen auf Basis tierischer und/oder pflanzlicher Öle werden diese durch die erfindungsgemäßen Additive nicht mit aromatischen und insbesondere nicht mit polyaromatischen Kohlenwasserstoffen vermischt.

Bei der Handhabung während Herstellung und Verarbeitung führen die erfindungsgemäßen Additive zu weniger gesundheitlichen Belastungen bei den damit beauftragten Mitarbeitern. Darüber hinaus führen sie als Kraftstoffbestandteil bei der bestimmungsgemäßen Verbrennung zu weniger Umweltbelastungen als die bekannten Additive des Standes der Technik.

Besonders geeignet sind die erfindungsgemäßen Additive für die Verbesserung der Eigenschaften von Mineralölen und Mineralöldestillaten wie Jet-Fuel, Benzin, Kerosin, Diesel und Heizöl, die zwecks Absenkung des Schwefelgehalts einer hydrierenden Raffination unterzogen wurden. Diese Öle und Mineralöldestillaten enthalten bevorzugt weniger als 350 ppm Schwefel und insbesondere weniger als 100 ppm Schwefel wie beispielsweise weniger als 50 ppm oder 10 ppm Schwefel. Des weiteren enthalten diese Öle bevorzugt weniger als 25 Gew.-%, insbesondere weniger als 22 Gew.-% wie beispielsweise weniger als 20 Gew.-% Aromaten.

Als Mitteldestillat bezeichnet man insbesondere solche Mineralöle, die durch Destillation von Rohöl gewonnen werden und im Bereich von 120 bis 450°C sieden, beispielsweise Kerosin, Jet-Fuel, Diesel und Heizöl. Besonders vorteilhaft sind die erfindungsgemäßen Zusammensetzungen in solchen Mitteldestillaten, die 90 %-Destillationspunkte unter 360°C, insbesondere 350°C und in Spezialfällen unter 340°C aufweisen. Unter aromatischen Verbindungen wird die Summe aus mono-, di- und polyzyklischen aromatischen Verbindungen verstanden, wie sie mittels HPLC gemäß DIN EN 12916 (Ausgabe 2001) bestimmbar ist. Die Mitteldestillate können auch untergeordnete Mengen wie beispielsweise bis zu 20 Vol.-% an Ölen tierischen und/oder pflanzlichen Ursprungs wie beispielsweise Rapsöl oder Rapsölsäuremethylester enthalten.

### Beispiele

### Wirksamkeit der Additive als Kaltfließverbesserer

Zur Beurteilung des Effekts der erfindungsgemäßen Additive auf die Kaltfließeigenschaften von Mitteldestillaten wurden die erfindungsgemäßen Additive (A) mit verschiedenen Coadditiven eingesetzt. Die eingesetzten Ethylen-Copolymeren (B) und Paraffindispergatoren (C) haben die unten angegebenen Charakteristika.
Die überlegene Wirksamkeit der erfindungsgemäßen Additive zusammen mit Ethylen-Copolymeren und Paraffindispergatoren für Mineralöle und Mineralöldestillate wird zum einen an Hand des CFPP-Tests (Cold Filter Plugging Test nach EN 116) beschrieben.

Des weiteren wird die Paraffindispergierung in Mitteldestillaten wie folgt im Kurzsedimenttest bestimmt:
150 ml der mit den in der Tabelle angegebenen Additivkomponenten versetzten Mitteldestillate wurden in 200 ml-Messzylindern in einem Kälteschrank mit -2°C/Stunde auf -13°C abgekühlt und 16 Stunden bei dieser Temperatur gelagert. Anschließend werden visuell Volumen und Aussehen sowohl der sedimentierten Paraffinphase wie auch der darüber stehenden Ölphase bestimmt und beurteilt. Eine geringe Sedimentmenge und eine trübe Ölphase zeigen eine gute Paraffindispergierung.

Zusätzlich werden die unteren 20 Vol.-% isoliert und der Cloud Point gemäß IP 3015 bestimmt. Eine nur geringe Abweichung des Cloud Points der unteren Phase (CP_{KS}) vom Blindwert des Öls zeigt eine gute Paraffindispergierung.

Folgende Additive wurden eingesetzt:
(A) Alkylphenolharze
   A1) Herstellung eines sauer katalysierten Nonylphenol-Formaldehydharzes in Rapsölsäuremethylester
      In einer 1 L Rührapparatur mit Wasserabscheider und N₂-Strom wurden 241 g Nonylphenol, 82 g Rapsölsäuremethylester und 1,6 g Alkylbenzolsulfonsäure vorgelegt. Die Mischung wurde unter Rühren auf 120°C erwärmt. Nun wurde hierzu 90 g 35 %ige Formaldehydlösung zugetropft und das Reaktionswasser abdestilliert. Nach dem Zutropfen wurde auf 145°C aufgeheizt und die Reaktionsmischung noch 1 h bei 145°C gerührt. Nach Abkühlen auf 100°C wurden weitere 126 g Rapsölmethylester zugegeben.
      Das erhaltene Polymer hatte ein Molekulargewicht Mw von 2.700 g/mol und eine Säurezahl von 0,5 mg KOH/g. Im ¹³C-NMR-Spektrum (500 MHz, Lösemittel CDCl₃) des Polymers nach Entfernen des Lösemittels zeigen Signale bei 174 und 51,5 ppm die Anwesenheit eines Methylesters, Signale bei 130 ppm die Anwesenheit olefinischer Doppelbindungen und zusätzliche Signale im Bereich von 8 bis 42 ppm die Anwesenheit von längeren Alkylresten.
   A2) Herstellung eines sauer katalysierten Dodecylphenol-Formaldehydharzes in Rapsölsäuremethylester
      In einer 500 ml Rührapparatur mit Wasserabscheider und N₂-Strom wurden 124,4 g Dodecylphenol, 132,0 g Rapsölsäuremethylester und 1,4 g Alkylbenzolsulfonsäure vorgelegt. Die Mischung wurde unter Rühren auf 120°C erwärmt. Nun wurde hierzu 42,2 g 35 %ige Formaldehydlösung zugetropft und das Reaktionswasser abdestilliert. Nach dem Zutropfen wurde 1 h bei 120°C gerührt, dann auf 145°C aufgeheizt und die Reaktionsmischung noch 1 h bei dieser Temperatur gerührt.
      Das erhaltene Polymer hatte ein Molekulargewicht Mw von 3200 g/mol und eine Säurezahl von 0,3 mg KOH/g. Im ¹³C-NMR-Spektrum (500 MHz, Lösemittel CDCl₃) des Polymers nach Entfernen des Lösemittels zeigen Signale bei 174 und 51,5 ppm die Anwesenheit eines Methylesters, Signale bei 130 ppm die Anwesenheit olefinischer Doppelbindungen und zusätzliche Signale im Bereich von 8 bis 42 ppm die Anwesenheit von längeren Alkylresten.
   A3) Herstellung eines sauer katalysierten C₂₀/₂₄Alkylphenol-Formaldehydharzes in Rapsölsäuremethylester
      In einer 500 ml Rührapparatur mit Wasserabscheider und N₂-Strom wurden 115,7 g C₂₀/₂₄-Alkylphenol und 158,3 g Rapsölsäuremethylester vorgelegt. Die Mischung wurde unter Rühren auf 120°C erwärmt. Nun wurde hierzu 26,0 g 35 %ige Formaldehydlösung zugetropft und das Reaktionswasser abdestilliert. Nach dem Zutropfen wurde 1 h bei 120°C gerührt, dann auf 145°C aufgeheizt und die Reaktionsmischung noch 1 h bei dieser Temperatur gerührt.
      Das erhaltene Polymer hatte ein Molekulargewicht Mw von 2500 g/mol und eine Säurezahl von 0,3 mg KOH/g. Im ¹³C-NMR-Spektrum (500 MHz, Lösemittel CDCl₃) des Polymers nach Entfernen des Lösemittels zeigen Signale bei 174 und 51,5 ppm die Anwesenheit eines Methylesters, Signale bei 130 ppm die Anwesenheit olefinischer Doppelbindungen und zusätzliche Signale im Bereich von 8 bis 42 ppm die Anwesenheit von längeren Alkylresten.
   A4) Herstellung eines sauer katalysierten Nonylphenol-Formaldehydharzes in Tallölfettsäure
      In einer 500 ml Rührapparatur mit Wasserabscheider und N₂-Strom wurden 96,3 g Nonylphenol, 66,8 g Tallölfettsäure und 0,64 g Alkylbenzolsulfonsäure vorgelegt. Die Mischung wurde unter Rühren auf 120°C erwärmt. Nun wurde hierzu 36,2 g 35%ige Formaldehydlösung zugetropft und das Reaktionswasser abdestilliert. Nach dem Zutropfen wurde auf 145°C aufgeheizt und die Reaktionsmischung noch 1 h bei 145°C gerührt.
      Das erhaltene Polymer hatte ein Molekulargewicht Mw von 2100 g/mol. Im ¹³C-NMR-Spektrum (500 MHz, Lösemittel CDCl₃) des Polymers nach Entfernen des Lösemittels zeigen Signale bei 178 ppm die Anwesenheit einer Carbonsäure, Signale bei 130 ppm die Anwesenheit olefinischer Doppelbindungen und zusätzliche Signale im Bereich von 8 bis 42 ppm die Anwesenheit von längeren Alkylresten.
   A5) Unter saurer Katalyse in Solvent Naphtha in Analogie zu A1 hergestelltes Nonylphenol-Formaldehydharz (Vergleichsbeispiel). Mw = 2400 g/mol, 50 %ig in Solvent Naphtha
   A6) Unter saurer Katalyse in Solvent Naphtha in Analogie zu A3 hergestelltes C₂₀/₂₄Alkylphenol-Formaldehydharz (Vergleichsbeispiel). Mw = 2700 g/mol, 50 %ig in Solvent Naphtha
(B) Charakterisierung der eingesetzten Ethylen-Copolymere
   B1 Copolymer aus Ethylen und 13,6 mol-% Vinylacetat mit einer bei 140°C gemessenen Schmelzviskosität von 120 mPas; 50 %ig in Kerosin
   B2 Terpolymer aus Ethylen, 13,7 mol-% Vinylacetat und 1,4 mol-% Neodecansäurevinylester mit einer bei 140°C gemessenen Schmelzviskosität von 98 mPas, 65 %ig in Kerosin.
   B3 Mischung aus zwei Teilen Copolymer B1 und einem Teil Copolymer B2, 65 %ig in Kerosin.
(C) Charakterisierung der eingesetzten Paraffindispergatoren C
   C1 Umsetzungsprodukt eines Dodecenyl-Spirobislactons mit einer Mischung aus primärem und sekundärem Talgfettamin, 60 %ig in Solvent Naphtha (hergestellt gemäß EP 0413279)
   C2 Umsetzungsprodukt eines Terpolymers aus C₁₄/₁₆-α-Olefin, Maleinsäureanhydrid und Allylpolyglykol mit 2 Equivalenten Ditalgfettamin, 50 %ig in Solvent Naphtha (hergestellt gemäß EP 0606055)
   C3 Umsetzungsprodukt aus Phthalsäureanhydrid und 2 Equivalenten Di(hydriertem Talgfett)amin, 50 %ig in Solvent Naphtha (hergestellt gemäß EP 0 061 894)
   C4 Umsetzungsprodukt aus Ethylendiamintetraessigsäure mit 4 Equivalenten Ditalgfettamin zum Amid-Ammoniumsalz, 50 %ig in Solvent Naphtha (hergestellt gemäß EP 0 398 101).

**Tabelle 1: Charakterisierung der Testöle: Als Testöle wurden aktuelle Öle aus europäischen Raffinerien herangezogen. Die Bestimmung des CFPP-Werts erfolgt gemäß EN 116 und die Bestimmung des Cloud Points gemäß ISO 3015. Die Bestimmung der aromatischen Kohlenwasserstoffgruppen erfolgt gemäß DIN EN 12916 (Ausgabe November 2001)**

| | | Testöl 1 | Testöl 2 | Testöl 3 | Testöl 4 |
|---|---|---|---|---|---|
| Destillation | | | | | |
| IBP | [°C] | 161 | 184 | 169 | 167 |
| 20 % | [°C] | 210 | 229 | 201 | 204 |
| 90 % | [°C] | 342 | 333 | 324 | 330 |
| FBP | [°C] | 365 | 360 | 344 | 357 |
| Cloud Point | [°C] | -9,7 | -6,7 | -6,0 | -5,8 |
| CFPP | [°C] | -13 | -9 | -8 | -8 |
| Schwefel | [ppm] | 3 | 31 | 6 | 8 |
| Dichte @15°C | [g/cm³] | 0,836 | 0,834 | 0,825 | 0,830 |

**Tabelle 2: Prüfung als Kaltfließverbesserer in Testöl 1**

| Beispiel | Additive | | | Testöl 1 (CP -9,7°C) | | | |
|---|---|---|---|---|---|---|---|
| | A | B | C | CFPP [°C] | Sediment [Vol.-%] | Aussehen Ölphase | CPKS [°C] |
| | 50 ppm A1 | 300 ppm B1 | - | -26 | 10 | wolkig | -4,2 |
| | 50 ppm A1 | 300 ppm B1 | 100 ppm C2 | -30 | 3 | trüb | -8,7 |
| | 50 ppm A1 | 400 ppm B1 | - | -27 | 20 | wolkig | -4,8 |
| | 50 ppm A1 | 350 ppm B1 | 100 ppm C2 | -30 | 1 | trüb | -9,3 |
| | 50 ppm A1 | 450 ppm B1 | - | -28 | 15 | wolkig | -6,4 |
| | 50 ppm A2 | 300 ppm B1 | 100 ppm C2 | -28 | 1 | trüb | -9,2 |
| | 75 ppm A2 | 350 ppm B1 | 75 ppm C1 | -29 | 2 | trüb | -9,0 |
| | 90 ppm A3 | 360 ppm B1 | 50 ppm C3 | -28 | 3 | trüb | -7,5 |
| (Vgl.) | - | 350 ppm B1 | - | -23 | 60 | klar | -1,6 |
| (Vgl.) | - | 450 ppm B1 | 100 ppm C2 | -23 | 40 | klar | -3,2 |
| (Vgl.) | 50 ppm A5 | 300 ppm B1 | 100 ppm C2 | -25 | 20 | wolkig | -3,8 |
| (Vgl.) | 50 ppm A5 | 350 ppm B1 | 100 ppm C2 | -27 | 30 | wolkig | -4,3 |

**Tabelle 3: Prüfung als Kaltfließverbesserer in Testöl 2**

| Beispiel | Additiv | | | Testöl 2 (CP -6,7°C) | | | |
|---|---|---|---|---|---|---|---|
| | A | B | C | CFPP | Sediment [Vol.-%] | Aussehen Ölphase | CP_{KS} [°C] |
| | 33 ppm A1 | 75 ppm B3 | 67 ppm C2 | -28 | 2 | trüb | -4,2 |
| | 33 ppm A1 | 120 ppm B3 | 67 ppm C2 | -30 | 0 | trüb | -5,7 |
| | 40 ppm A1 | 70 ppm B3 | 40 ppm C1 | -27 | 5 | trüb | -2,6 |
| | 40 ppm A1 | 120 ppm B3 | 40 ppm C1 | -29 | 0 | trüb | -5,7 |
| | 50 ppm A2 | 120 ppmB3 | 25 ppm C4 | -27 | 0 | trüb | -5,5 |
| (Vgl.) | 33 ppm A5 | 75 ppm B3 | 67 ppm C2 | -24 | 10 | klar | -1,5 |
| (Vgl.) | 40 ppm A5 | 70 ppm B3 | 40 ppm C1 | -24 | 20 | wolkig | -0,8 |
| (Vgl.) | 40 ppm A5 | 120 ppm B3 | 40 ppm C1 | -25 | 10 | wolkig | -3,9 |

**Tabelle 4: Prüfung als Kaltfließverbesserer in Testöl 3**

| Beispiel | Additiv | | | Testöl 3 (CP -8,0°C) | | | |
|---|---|---|---|---|---|---|---|
| | A | B | C | CFPP | Sediment [Vol.-%] | Aussehen Ölphase | CP_{KS} [°C] |
| | 80 ppm A1 | 300 ppm B3 | 160 ppm C2 | -28 | 10 | wolkig | -3,9 |
| | 80 ppm A2 | 300 ppm B3 | 160 ppm C2 | -29 | 15 | wolkig | -2,2 |
| | 80 ppm A1 | 300 ppm B3 | 160 ppm C4 | -28 | 10 | wolkig | -3,5 |
| (Vgl.) | 80 ppm A5 | 300 ppm B3 | 160 ppm C2 | -24 | 35 | klar | -0,5 |
| (Vgl.) | 80 ppm A5 | 300 ppm B3 | 160 ppm C4 | -22 | 30 | klar | 0,0 |

**Tabelle 5: Prüfung als Kaltfließverbesserer in Testöl 4**

| Beispiel | Additiv | | | Testöl 4 (CP -8,0°C) | | | |
|---|---|---|---|---|---|---|---|
| | A | B | C | CFPP | Sediment [Vol.-%] | Aussehen Ölphase | CP_{KS} [°C] |
| | 80 ppm A1 | 300 ppm B3 | 160 ppm C2 | -28 | 5 | trüb | -5,3 |
| | 80 ppm A2 | 300 ppm B3 | 160 ppm C2 | -30 | 5 | trüb | -6,1 |
| | 80 ppm A2 | 300 ppm B3 | 160 ppm C4 | -26 | 5 | trüb | -5,6 |
| (Vgl.) | 80 ppm A5 | 300 ppm B3 | 160 ppm C2 | -21 | 25 | klar | -3,2 |
| (Vgl.) | 80 ppm A5 | 300 ppm B3 | 160 ppm C4 | -21 | 25 | klar | -2,7 |

Die Versuche zeigen, dass die erfindungsgemäßen Additive hinsichtlich der Verbesserung der Kaltfließfähigkeit und insbesondere der CFPP-Absenkung und der Paraffindispergierung von Mitteldestillaten den Additiven des Standes der Technik überlegen sind. Sie bewirken eine verbesserte Paraffindispergierung oder, alternativ eine vergleichbare Paraffindispergierung bei niedrigerer Additivdosierung.

### Phasenstabilität der Additive

Zur Beurteilung der Phasenstabilität von Additivmischungen, die erfindungsgemäße Additive enthalten, wurden die oben aufgeführten Wirkstoffe gemäß den in Tabelle 6 angegebenen Massenverhältnissen bei 60°C unter Rühren homogenisiert. Anschließend wurde die Stabilität der Lösungen nach einwöchiger Lagerung bei 40°C visuell beurteilt.

**Tabelle 6: Phasenstabilität der Additivmischungen**

| Beispiel | Additiv | | | visuelle Beurteilung |
|---|---|---|---|---|
| | A | B | C | |
| | 15 % A1 | 70 % B2 | 15 % C1 | homogen trüb |
| | 15 % A2 | 70 % B2 | 15 % C2 | homogen trüb |
| (Vgl.) | 15 % A6 | 70 % B2 | 15 % C2 | 2-phasig |
| (Vgl.) | 15 % A6 | 70 % B1 | 15 % C1 | 2-phasig |

## Patentansprüche

1. Alkylphenol-Aldehydharze, enthaltend Oligo- oder Polymere mit einer repetitiven struktureinheit der Formel 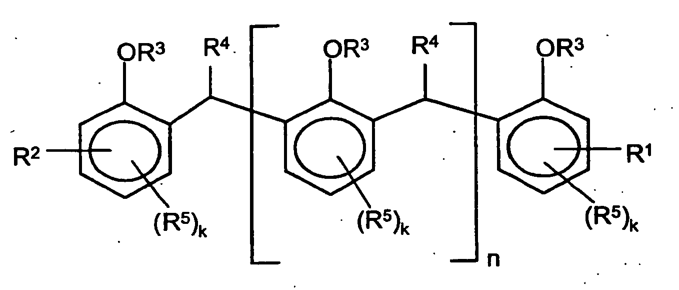 worin
R¹ für einen verzweigten Alkyl- oder Alkenylrest mit 10 bis 40 C-Atomen steht, der mindestens eine Carboxyl-, Carboxylat- und/oder Estergruppe trägt,
R² für Wasserstoff oder R¹
R³ für Wasserstoff oder eine Alkoxygruppe der Formel
-(A-O)ₘ-H,
A für eine C₂- bis C₄-Alkylengruppe,
m für eine Zahl von 1 bis 100,
R⁴ für Wasserstoff, einen C₁- bis C₁₁-Alkylrest oder eine Carboxylgruppe,
R⁵ für C₁-C₂₀₀-Alkyl oder -Alkenyl, O-R⁶ oder O-C(O)-R⁶,
R⁶ für C₁-C₂₀₀-Alkyl oder Alkenyl,
n für eine Zahl von 1 bis 100 und
k für 1 oder 2 steht.

2. Verbindungen nach Anspruch 1, worin R¹ für einen verzweigten C₁₂ bis C₂₂-Alkylrest oder -Alkenylrest steht, des mindestens eine Carboxyl-, Carboxylat- und/oder Estergruppe trägt.

3. Verbindungen nach Anspruch 1 und/oder 2, worin R³ für Wasserstoff steht.

4. Verbindungen nach einem oder mehreren der Ansprüche 1 bis 3, worin A für eine Ethylengruppe steht.

5. Verbindungen nach einem oder mehreren der Ansprüche 1 bis 4, worin R⁴ für Wasserstoff steht.

6. Verbindungen nach einem oder mehreren der Ansprüche 1 bis 5, worin R⁵ und R⁶ unabhängig voneinander für C₄- bis C₂₀-Alkyl stehen.

7. Verbindungen nach einem oder mehreren der Ansprüche 1 bis 6, worin n für eine Zahl von 2 bis 10 steht.

8. Zusammensetzungen, enthaltend mindestens eine Verbindung nach einem oder mehreren der Ansprüche 1 bis 7 und mindestens ein Ethylen-ungesättigter Ester-Copolymere (Bestandteil II).

9. Zusammensetzungen, enthaltend mindestens eine Verbindung nach einem oder mehreren der Ansprüche 1 bis 7 und mindestens eine öllösliche polare Stickstoffverbindung, welche ein Umsetzungsprodukt von Fettamin mit Verbindungen, die eine Acylgruppe enthalten, ist (Bestandteil III).

10. Zusammensetzungen, enthaltend mindestens eine Verbindung nach einem oder mehreren der Ansprüche 1 bis 7 und ein Kammpolymer (Bestandteil IV) der Formel 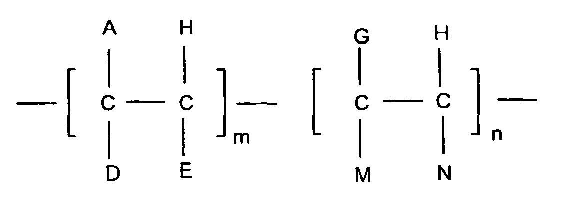 worin
D A R', COOR', OCOR', R"-COOR', OR'; H, CH₃, A oder R";
E H, A;
G H, R", R"-COOR', einen Arylrest oder einen heterocyclischen Rest;
M H, COOR", OCOR", OR", COOH;
N H, R", COOR", OCOR", einen Arylrest;
R' eine Kohlenwasserstoffkette mit 8 bis 50 Kohlenstoffatomen;
R" eine Kohlenwasserstoffkette mit 1 bis 10 Kohlenstoffatomen;
m eine Zahl zwischen 0,4 und 1,0; und
n eine Zahl zwischen 0 und 0,6 bedeuten.

11. Zusammensetzungen, enthaltend mindestens eine Verbindung nach einem oder mehreren der Ansprüche 1 bis 7 und mindestens eine Polyoxyalkylenverbindung, welche ein Ester, Ether und Ether/Ester von Polyolen, die mindestens einen Alkylrest mit 12 bis 30 C-Atomen tragen, ist (Bestandteil V).

12. Zusammensetzungen, enthaltend mindestens eine Verbindung nach einem oder mehreren der Ansprüche 1 bis 7 und mindestens ein Olefincopolymer, welches neben Ethylen Struktureinheiten, die sich von α-Olefinen mit 3 bis 24 C-Atomen ableiten, enthält, und ein Molekulargewicht von bis zu 120.000 g/mol aufweist (Bestandteil VI).

13. Brennstoffzusammensetzung mit einem Schwefelgehalt von weniger als 350 ppm, enthaltend ein Mineralöldestillat oder ein aus pflanzlichen oder tierischen Rohstoffen gewonnenes Öl, und 1 bis 1000 ppm einer Verbindung nach einem oder mehreren der Ansprüche 1 bis 7 oder einer Zusammensetzung nach einem oder mehreren der Ansprüche 8 bis 12.

14. Brennstoffzusammensetzung nach Anspruch 13, worin das Mineralöldestillat ein Mitteldestillat ist.

15. Verwendung einer Verbindung nach einem oder mehreren der Ansprüche 1 bis 7 oder einer Zusammensetzung nach einem oder mehreren der Ansprüche 8 bis 12 zur Verbesserung der Schmierfähigkeit von Mitteldestillaten mit einem Schwefelgehalt von weniger als 350 ppm oder von aus pflanzlichen oder tierischen Rohstoffen gewonnenen Ölen.

16. Verwendung einer Verbindung nach einem oder mehreren der Ansprüche 1 bis 7 oder einer Zusammensetzung nach einem oder mehreren der Ansprüche 8 bis 12 zur Verbesserung der Kälteeigenschaften von Mitteldestillaten mit einem Schwefelgehalt von weniger als 350 ppm oder von aus pflanzlichen oder tierischen Rohstoffen gewonnenen Ölen.

17. Verwendung einer Verbindung nach einem oder mehreren der Ansprüche 1 bis 7 oder einer Zusammensetzung nach einem oder mehreren der Ansprüche 8 bis 12 zur Spaltung von Emulsionen aus Mitteldestillaten mit einem Schwefelgehalt von weniger als 350 ppm oder von aus pflanzlichen oder tierischen Rohstoffen gewonnenen Ölen mit Wasser.

## Claims

1. An alkylphenol-aldehyde resin containing oligo- or polymers having a repeat structural unit of the formula 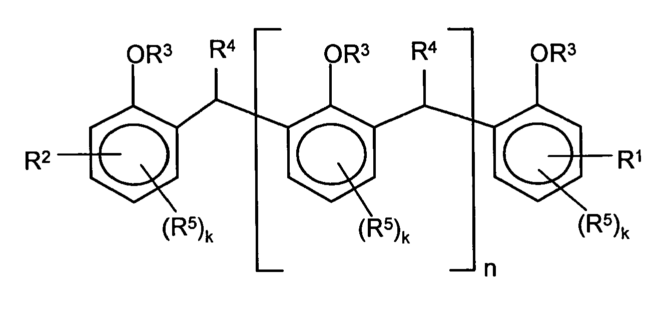 where
R¹ is a branched alkyl or alkenyl radical which has from 10 to 40 carbon atoms and bears at least one carboxyl, carboxylate and/or ester group,
R² is hydrogen or R¹
R³ is hydrogen or an alkoxy group of the formula - (A - O)ₘ - H,
A is a C₂- to C₄-alkylene group,
m is from 1 to 100,
R⁴ is hydrogen, a C₁- to C₁₁-alkyl radical or a carboxyl group,
R⁵ is C₁-C₂₀₀-alkyl or -alkenyl, O-R⁶ or O-C(O)-R⁶,
R⁶ is C₁-C₂₀₀-alkyl or -alkenyl,
n is from 1 to 100 and
k is 1 or 2.

2. A compound as claimed in claim 1, where R¹ is a branched C₁₂ to C₂₂-alkyl radical or -alkenyl radical which bears at least one carboxyl, carboxylate and/or ester group.

3. A compound as claimed in claim 1 and/or 2, where R³ is hydrogen.

4. A compound as claimed in one or more of claims 1 to 3, where A is an ethylene group.

5. A compound as claimed in one or more of claims 1 to 4, where R⁴ is hydrogen.

6. A compound as claimed in one or more of claims 1 to 5, where R⁵ and R⁶ are each independently C₄- to C₂₀-alkyl.

7. A compound as claimed in one or more of claims 1 to 6, where n is from 2 to 10.

8. A composition comprising at least one compound as claimed in one or more of claims 1 to 7 and at least one ethylenically unsaturated ester copolymer (constituent II).

9. A composition comprising at least one compound as claimed in one or more of claims 1 to 7 and at least one oil-soluble polar nitrogen compound which is a reaction product of fatty amine with compounds which contain an acyl group (constituent III).

10. A composition comprising at least one compound as claimed in one or more of claims 1 to 7 and a comb polymer (constituent IV) of the formula 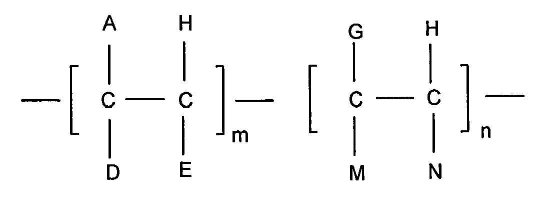 where
A is R', COOR', OCOR', R"-COOR', OR';
D is H, CH₃, A or R";
E is H, A;
G is H, R", R"-COOR', an aryl radical or a heterocyclic radical;
M is H, COOR", OCOR", OR", COOH;
N is H, R", COOR", OCOR", an aryl radical;
R' is a hydrocarbon chain having from 8 to 50 carbon atoms;
R" is a hydrocarbon chain having from 1 to 10 carbon atoms;
m is between 0.4 and 1.0; and
n is between 0 and 0.6.

11. A composition comprising at least one compound as claimed in one or more of claims 1 to 7 and at least one polyoxyalkylene compound which is an ester, ether and ether/ester of polyols which bear at least one alkyl radical having from 12 to 30 carbon atoms (constituent V).

12. A composition comprising at least one compound as claimed in one or more of claims 1 to 7 and at least one olefin copolymer which, as well as ethylene, contains structural units which derive from α-olefins having from 3 to 24 carbon atoms, and has a molecular weight of up to 120 000 g/mol (constituent VI).

13. A fuel composition having a sulfur content of less than 350 ppm, comprising a mineral oil distillate or an oil obtained from vegetable or animal raw materials, and from 1 to 1000 ppm of a compound as claimed in one or more of claims 1 to 7 or of a composition as claimed in one or more of claims 8 to 12.

14. The fuel composition as claimed in claim 13, wherein the mineral oil distillate is a middle distillate.

15. The use of a compound as claimed in one or more of claims 1 to 7 or of a composition as claimed in one or more of claims 8 to 12 for improving the lubricity of middle distillates having a sulfur content of less than 350 ppm or of oils obtained from vegetable or animal raw materials.

16. The use of a compound as claimed in one or more of claims 1 to 7 or of a composition as claimed in one or more of claims 8 to 12 for improving the cold properties of middle distillates having a sulfur content of less than 350 ppm or of oils obtained from vegetable or animal raw materials.

17. The use of a compound as claimed in one or more of claims 1 to 7 or of a composition as claimed in one or more of claims 8 to 12 for splitting emulsions composed of middle distillates having a sulfur content of less than 350 ppm or of oils obtained from vegetable or animal raw materials with water.

## Revendications

1. Résines d'alkylphénol-aldéhyde contenant des oligomères ou des polymères présentant une unité de structure répétitive de formule 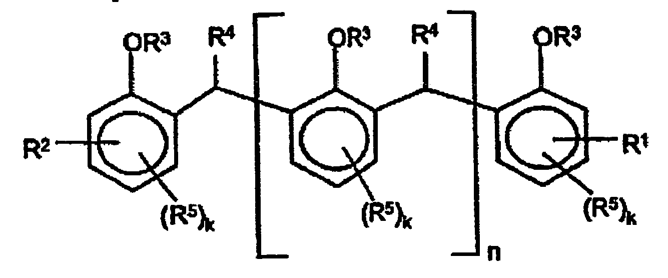 où
R¹ représente un radical alkyle ou alcényle ramifié comprenant 10 à 40 atomes de carbone, qui porte au moins un groupe carboxyle, carboxylate et/ou ester,
R² représente hydrogène ou R¹
R³ représente hydrogène ou un groupe alcoxy de formule -(A-O)ₘ-H,
A représente un groupe C₂-C₄-alkylène,
m vaut un nombre de 1 à 100,
R⁴ représente hydrogène, un radical C₁-C₁₁-alkyle ou un groupe carboxyle,
R⁵ représente C₁-C₂₀₀-alkyle ou C₁-C₂₀₀-alcényle, O-R⁶ ou O-C(O)-R⁶,
R⁶ représente C₁-C₂₀₀-alkyle ou C₁-C₂₀₀-alcényle,
n vaut un nombre de 1 à 100, et
k vaut 1 ou 2.

2. Composés selon la revendication 1, où R¹ représente un radical alkyle ou alcényle ramifié en C₁₂-C₂₂, qui porte au moins un groupe carboxyle, carboxylate et/ou ester.

3. Composés selon la revendication 1 et/ou 2, où R³ représente de l'hydrogène.

4. Composés selon l'une ou plusieurs des revendications 1 à 3, où A représente un groupe éthylène.

5. Composés selon l'une ou plusieurs des revendications 1 à 4, où R⁴ représente hydrogène.

6. Composés selon l'une ou plusieurs des revendications 1 à 5, où R⁵ et R⁶ représentent, indépendamment l'un de l'autre, C₄-C₂₀-alkyle.

7. Composés selon l'une ou plusieurs des revendications 1 à 6, où n vaut un nombre de 2 à 10.

8. Compositions, contenant au moins un composé selon l'une ou plusieurs des revendications 1 à 7 et au moins un copolymère d'éthylène-ester insaturé (constituant II).

9. Compositions, contenant au moins un composé selon l'une ou plusieurs des revendications 1 à 7 et au moins un composé azoté polaire liposoluble qui est un produit de transformation d'une amine grasse avec des composés qui contiennent un groupe acyle (constituant III).

10. Compositions, contenant au moins un composé selon l'une ou plusieurs des revendications 1 à 7 et un polymère en peigne (constituant IV) de formule 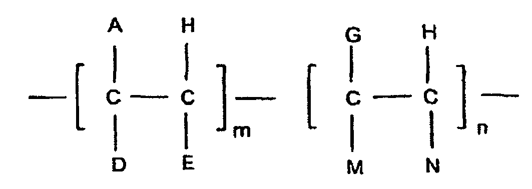 où
A signifie R', COOR', OCOR', R''-COOR', OR' ;
D signifie H, CH₃, A ou R" ;
E signifie H, A ;
G signifie H, R", R"-COOR', un radical aryle ou un radical hétérocyclique ;
M signifie H, COOR" , OCOR" , OR" , COOH ;
N signifie H, R", COOR" , OCOR" , un radical aryle ;
R' une chaîne hydrocarbonée comprenant 8 à 50 atomes de carbone ;
R " signifie une chaîne hydrocarbonée comprenant 1 à 10 atomes de carbone ;
m vaut un nombre entre 0,4 et 1,0 ; et
n vaut un nombre entre 0 et 0,6.

11. Compositions, contenant au moins un composé selon l'une ou plusieurs des revendications 1 à 7 et au moins un composé polyoxyalkylène qui est un ester, un éther et un éther/ester de polyols qui portent au moins un radical alkyle comprenant 12 à 30 atomes de carbone, (constituant V).

12. Compositions contenant au moins un composé selon l'une ou plusieurs des revendications 1 à 7 et au moins un copolymère d'oléfine, qui contient, outre de l'éthylène, des unités de structure qui sont dérivées d'α-oléfines comprenant 3 à 24 atomes de carbone, et qui présente un poids moléculaire allant jusqu'à 120 000 g/mole (constituant VI).

13. Composition de carburant présentant une teneur en soufre inférieure à 350 ppm, contenant un distillat d'huile minérale ou une huile obtenue à partir de matières premières végétales ou animales et 1 à 1000 ppm d'un composé selon l'une ou plusieurs des revendications 1 à 7 ou une composition selon l'une ou plusieurs des revendications 8 à 12.

14. Composition de carburant selon la revendication 13, où le distillat d'huile minérale est un distillat moyen.

15. Utilisation d'un composé selon l'une ou plusieurs des revendications 1 à 7 ou d'une composition selon l'une ou plusieurs des revendications 8 à 12 pour améliorer l'aptitude à la lubrification de distillats moyens présentant une teneur en soufre inférieure à 350 ppm ou d'huiles obtenues à partir de matières premières végétales ou animales.

16. Utilisation d'un composé selon l'une ou plusieurs des revendications 1 à 7 ou d'une composition selon l'une ou plusieurs des revendications 8 à 12 pour améliorer les propriétés de tenue au froid de distillats moyens présentant une teneur en soufre inférieure à 350 ppm ou d'huiles obtenues à partir de matières premières végétales ou animales.

17. Utilisation d'un composé selon l'une ou plusieurs des revendications 1 à 7 ou d'une composition selon l'une ou plusieurs des revendications 8 à 12 pour la dissociation d'émulsions constituées par des distillats moyens présentant une teneur en soufre inférieure à 350 ppm ou des huiles obtenues à partir de matières premières végétales ou animales avec de l'eau.
